Europäisches Patentamt

European Patent Office

Office européen des brevets

(11) Publication number: **0 663 275 A1**

# EUROPEAN PATENT APPLICATION

(21) Application number: **94300338.4**

(22) Date of filing: **18.01.94**

(51) Int. Cl.6: **B28B 19/00**, B28B 13/02, C04B 11/024, E04C 2/04

(43) Date of publication of application:
**19.07.95 Bulletin 95/29**

(84) Designated Contracting States:
**DE FR GB**

(71) Applicant: **YOSHINO GYPSUM CO., LTD.**
**3-1, Marunouchi 3-chome**
**Chiyoda-ku**
**Tokyo (JP)**

(72) Inventor: **Kishibayashi, Tetsuo**
**9-22, Maechi 3-chome**
**Urawa-shi,**
**Saitama-ken (JP)**

Inventor: **Miura, Satoru**
**17-21, Osawa 4-chome**
**Koshigaya-shi,**
**Saitama-ken (JP)**
Inventor: **Isoda, Hiroshi**
**2200-3, Kubota**
**Sodegaura-shi,**
**Chiba-ken (JP)**

(74) Representative: **McCallum, William Potter et al**
**Cruikshank & Fairweather**
**19 Royal Exchange Square**
**Glasgow G1 3AE**
**Scotland (GB)**

(54) **Method for producing gypsum board.**

(57) A method for producing a gypsum board comprises the steps of supplying a first slurry of calcined gypsum prepared in a main mixer (1) to the widthwise central area (5) of a lower substratum (2) for gypsum board while simultaneously supplying a second slurry of calcined gypsum, which is identical to the first slurry, but is supplemented with glycerin and/or at least one saccharide and prepared in a sum-mixer, to both widthwise ends of the lower substratum (2) for gypsum board, then putting an upper substratum (2) for gypsum board on the lower substratum provided thereon with the layer of these first and second slurries, passing the resulting assembly through upper and lower forming machines (8) to give a green gypsum board, setting the calcined gypsum in the green board and subjecting the board to a drying process to remove excess moisture present therein through evaporation. The method permits highly efficient production of gypsum boards which does not result in separation of the substrate from the gypsum due to excess dehydration during the drying process.

## FIG. I

EP 0 663 275 A1

The present invention relates to a method for producing a gypsum board which can be widely used as, for instance, a construction material and an interior material. The invention also relates to a gypsum board produced by such a method.

A gypsum board has conventionally been produced by a method which comprises the steps of, for instance, mixing, in a main mixer, a mixture comprising water, calcined gypsum (or hemi-hydrate gypsum), a forming agent, an adhesive aid such as a starch and other additives such as cellulose fibers and inorganic fibers to give a slurry of the calcined gypsum, pouring the slurry into the space formed between upper and lower substrate for gypsum board, then forming it into a sheet-like product by passing through a forming machine, while continuously transporting by a belt conveyor or the like, cutting the product into green gypsum boards each having a desired length during transportation by a belt conveyor or the like, setting the calcined gypsum present in the green boards in the form of gypsum dihydrate through hydration of the calcined gypsum and then transferring the hydrated and hardened boards to a drying process for removing the excess water and for drying the boards to thus complete intended gypsum boards.

In the drying process, however, the moisture in the green gypsum board is evaporated through both widthwise ends thereof easier than through the central portion thereof and accordingly, moisture up to an amount greater than the excess thereof to be removed is removed from the green board, i.e., even the water of crystallization is removed from the gypsum dihydrate present therein. Under such circumstances, this problem has presently been solved by again mixing the gypsum slurry withdrawn from the main mixer in a sub-mixer to increase the density thereof and pouring the slurry having a high density into both ends of the substratum for the gypsum board to thus increase the density of the slurry present in both ends of the board. In this case the resulting gypsum board does not suffer from a problem concerning the adhesive property of both ends thereof if the atmospheric temperature in the dryer is not more than 160°C. If, however, the atmospheric temperature in the dryer exceeds the upper limit, a part of the water of crystallization is removed from the gypsum slurry layer through both ends of the gypsum board during the drying process even in the case where a slurry having a high density is simply used in both edge areas of the board and this leads to loss or reduction of adhesion at both ends of the board. Such incomplete adhesion has been a major obstacle in improving the productivity of the gypsum board.

Alternatively, other methods for setting both ends of a gypsum board have also been known. There have been proposed, for instance, a method comprising applying a solution containing sucrose, glycerin and water or dextrose to the adhesive surface, at its both ends, of the lower substratum (U.S. patent No. 3,017,305) and a method comprising spraying corn syrup on the layer of a slurry of calcined gypsum at both ends of a green gypsum board (U.S. Patent No. 3,382,250), but the gypsum boards produced by these methods have still been insufficient in the adhesion of the gypsum layer to the substrate at both ends thereof.

Accordingly, an object of the present invention is to provide a method for producing a gypsum board, which permits the solution of the foregoing problems associated with the conventional techniques, i.e., a method for producing a gypsum board which allows inhibition of any excess dehydration at both ends of the gypsum board during the drying process and which permits an improvement in the productivity of the gypsum board while maintaining high adhesion at both ends of the gypsum board even in an atmosphere having a temperature of not less than 160°C.

According to the present invention, there is provided a method for producing a gypsum board comprising the steps of supplying a first slurry of calcined gypsum to the central area of a lower substratum for the gypsum board; supplying a second slurry of calcined gypsum supplemented with glycerin and/or at least one saccharide to both widthwise ends of said lower substratum; locating an upper substratum for the gypsum board on the lower substratum provided thereon with a layer of said first and second slurries; passing the resulting assembly through forming apparatus to provide a green gypsum board; setting the calcined gypsum in the green board; and subjecting the board to a drying process to remove excess moisture present therein through evaporation.

According to a further aspect of the present invention there is provided a method for producing a gypsum board which comprises the steps of supplying a first slurry of calcined gypsum prepared in a main mixer to the widthwise central area of a lower substratum for gypsum board while simultaneously supplying a second slurry of calcined gypsum which is identical to the first slurry prepared in the main mixer, but is supplemented with glycerin and/or at least one saccharide prepared in a sub-mixer to both widthwise ends of the lower substratum for gypsum board, then putting an upper substratum for gypsum board on the lower substratum provided thereon with the layer of these first and second slurries, passing the resulting assembly through upper and lower forming machines to give a green gypsum board, setting the calcined gypsum in the green gypsum board and subjecting the hardened green gypsum board to a drying process to remove excess moisture present therein through evaporation.

According to yet another aspect of the present invention, there is provided a gypsum board comprising a first substratum and a second substratum, a layer of calcined gypsum between said first and second substrata, and peripheral edge portions of said layer containing glycerin and/or at least one saccharide.

The inventors of this invention have conducted various studies to achieve the foregoing object, have found out that the problem of the dehydration at both ends of a green gypsum board during a drying process can be controlled by elevating the dehydration temperature of the gypsum present in both edge areas of the green gypsum board through pouring, into the edge areas of the gypsum board, a slurry of calcined gypsum prepared in a sub-mixer to which glycerin and/or at least one member selected from saccharides such as dextrose, sucrose, and isomerized derivatives of these saccharides are added and thus have completed the present invention on the basis of this finding.

An embodiment of the present invention will now be described by way of example, with reference to the accompanying drawing in which:-

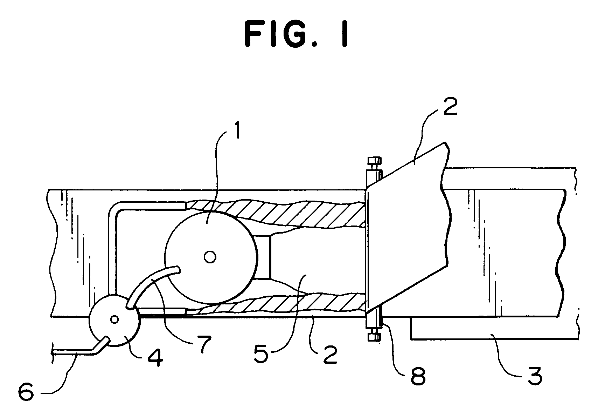

Figure 1 is a schematic diagram for explaining a manufacturing process for a gypsum board according to the method of the present invention.

The method of the present invention will hereunder be described in more detail.

The saccharides usable in the invention are those represented by the general formula: $C_n(H_2O)_n$ and include monosaccharides (glucose), polysaccharides (polyglucos) and oligosaccharides which lie between the monosaccharide and the polysaccharide, which are generic names of aldehydes or ketones of polyalcohols wherein n is greater than 3 (integer). For example, the saccharide used can be dextrose, sucrose or an isomerized derivative of such saccharide. In the method of the present invention, these saccharides may be used alone or in any combination.

In the present invention, the content of calcined gypsum in the aqueous slurry is preferably 50 to 70% by weight, more preferably 55 to 60% by weight, relative to the weight of the aqueous slurry.

In the present invention, the aqueous slurry of calcined gypsum prepared by mixing in a sub-mixer (hereunder referred to as "sub-mixer slurry") must comprise glycerin and/or at least one saccharide component, as essential components, in addition to a conventional slurry of calcined gypsum similar to the aqueous slurry of calcined gypsum prepared in a main mixer (hereunder referred to as "main mixer slurry"), which comprises water, calcined gypsum, a forming agent, an adhesive aid such as starches and other additives such as cellulose fibers and inorganic fibers (e.g., glass fiber). In this respect, the glycerin and/or at least one saccharide component, as essential ingredients, are desirably present in the sub-mixer slurry in an amount ranging from 0.05 to 5% by weight (hereunder simply referred to as "%") and preferably 0.3 to 2% on the basis of the total weight of the calcined gypsum used.

The sub-mixer slurry of calcined gypsum may be separately prepared in a sub-mixer independent of the main mixer slurry or may be prepared by withdrawing a part of the main mixer slurry from the main mixer and mixing it together with the foregoing glycerin and/or at least one saccharide component in a sub-mixer. In the latter method, the amount of the slurry withdrawn from the main mixer for the preparation of the sub-mixer slurry is in general 5 to 30% of the total amount of the main mixer slurry of calcined gypsum. According to the present invention, a solution of the foregoing saccharide is added, through a pipe 6, to and mixed with the main mixer slurry of calcined gypsum withdrawn from the main mixer in an amount ranging from 0.05 to 5% expressed in terms of the quantity of saccharide on the basis of the weight of the calcined gypsum present in the slurry to thus elevate the dehydration temperature of the resulting sub-mixer slurry. The resulting sub-mixer slurry is accordingly suitable for supplying to the end portions of a green gypsum board as a slurry of calcined gypsum having a high dehydration temperature in order to eliminate the drawbacks associated with the conventional methods, such as problems of low adhesion and low productivity.

In the present invention, the main mixer slurry which is supplied onto the central area (corresponding to the central portion of the resulting gypsum board) of a substratum for gypsum board may be the aforementioned conventional slurry of calcined gypsum. Moreover, the main mixer slurry may likewise comprise glycerin and/or at least one saccharide like the sub-mixer slurry in addition to the ingredients listed above in connection with the sub-mixer slurry. In this case, the glycerin and/or at least one saccharide component may be used in the amount falling within the range defined above in connection with the sub-mixer slurry, but the amount thereof may be identical to or different from that used in the sub-mixer slurry.

Moreover, the substratum for gypsum board used in the present invention may be those currently employed in this art. The substratum for gypsum board in general comprises a surface layer, an intermediate layer and an adhesive layer and those generally used have a thickness desirably ranging from 0.2 to 1.0 mm.

Molding machines usable in the invention include, for instance, forming rolls and plates and combinations of upper and lower forming machines including, for instance, forming rolls and/or plates.

As has been explained above in detail, the method according to the present invention permits highly efficient production of gypsum boards which obviates or mitigates any separation of the substrate from the gypsum due to excess dehydration during the drying process. This is because the method allows inhibition of any excess dehydration at both ends of the gypsum board during the drying process and permits an improvement in the productivity of the gypsum board while maintaining high adhesion of the substrate to the gypsum at both ends of the board even in an atmosphere having a temperature of not less than 160°C.

The method according to the present invention will hereunder be described in more detail with reference to the following working Examples and the effects practically attained by the invention will also be discussed in detail in comparison with Comparative Examples given below.

Example I

As shown in Figure 1, there were introduced, into a main mixer 1, ingredients such as hemi-hydrate gypsum, water and starch in a desired mixing ratio and the mixture was sufficiently kneaded to give a slurry 5 of calcined gypsum mainly comprising calcined gypsum and water in an amount of 85% of the calcined gypsum used and including starch in an amount of 0.5% of the calcined gypsum. The resulting main mixer slurry 5 was poured on the central area of a lower substratum 2 (having a thickness of 0.5 mm) for gypsum board which was continuously transferred. Separately, a part (about 10%) of the main mixer slurry was withdrawn from the main mixer through a pipe 7 for withdrawing the slurry of calcined gypsum and introduced into a sub-mixer 4, a solution of molasses (a liquid remaining after a sucrose-production process and having a sugar content of 42%) was added to the slurry in an amount of 0.6%, as the saccharide component, on the basis of the amount of the calcined gypsum present in the sub-mixer. Then the mixture was again kneaded to give a slurry of calcined gypsum (sub-mixer slurry) and the resulting sub-mixer slurry was poured onto both widthwise end areas of the lower substratum for the gypsum board. Then an upper substratum 2 for gypsum board was superimposed on these slurries of calcined gypsum. The resulting assembly was passed through a pair of forming rolls 8, (the lower forming roll not being shown) to give a sheet-like principal board having a thickness of 12 mm and a width of 910 mm. The principal board thus produced was conveyed by a belt conveyor 3 and cut into plates having an appropriate length.

The calcined gypsum in the green gypsum board thus produced was hardened through hydration, then dried in a dryer whose atmosphere was maintained at 260°C and finally cut into gypsum boards having a commercial size, i.e., a width of 910 mm, a thickness of 12 mm and length of 1820 mm. In the resulting gypsum board, the foregoing saccharides were present in the peripheral edge portions extending over a width of 45 mm from the edge.

Example 2

A main mixer slurry was prepared, in a main mixer 1, from ingredients identical to those used in Example 1 and in a mixing ratio identical to that used in Example 1, while a sub-mixer slurry was prepared by admixing the main mixer slurry with a 15:20 mixture of a sucrose solution (0.45% of sucrose on the basis of the calcined gypsum) and glycerin, the amount of the mixture added to the slurry being 0.6% on the basis of the calcined gypsum present therein. Then the same procedures used in Example 1 were repeated to produce a gypsum board.

Comparative Example 1

The same procedures used in Example 1 were repeated except that molasses and/or glycerin were not added to the sub-mixer slurry to thus give main mixer and sub-mixer slurries and to produce a gypsum board having a width of 910 mm, a thickness of 12 mm and a length of 1820 mm.

The gypsum boards produced in the foregoing Examples and Comparative Example were each subjected to an adhesion test in which the board was inspected for the adhesion at the widthwise edge portion extending over a width of 40 mm from the edge and each gypsum board was also inspected for the amount of "water of composition" present in the core of the gypsum board (hardened and dried portion of the calcined gypsum slurry) and the rate of dry out thereof. The results thus obtained are summarized in the following Table 1.

Table 1

|  | Example 1 | Example 2 | Comp. Ex. 1 |
|---|---|---|---|
| Adhesion Test | No Peeling | No Peeling | Peeled Off |
| Water of Composition | 12.2% | 12.9% | 9.6% |
| Rate of Dry Out | 3.7% | 3.0% | 6.1% |

In respect of the adhesion test, all of the gypsum boards produced in Examples 1 and 2 and Comparative Example 1 did not exhibit any peeling in the widthwise central area and exhibited good adhesion.

The results listed in Table 1 clearly indicate that the gypsum boards produced according to the method of the present invention do not cause any peeling off of the substrate at both ends thereof and exhibit improved adhesion at the ends and that the dehydration of the gypsum boards of the present invention is not accompanied by any elimination of the water of crystallization thereof.

Test Methods

I. Adhesion Test: This test was carried out according to JIS A-6901.

II. Determination of Amount of Water of Composition

About 1 g of a sample gypsum was collected from the widthwise edge portion of each gypsum board which extended over a width of 40 mm from the edge and was present at a level of about 1 mm below the adhesive face of the substratum of the board.

About 1 g of each sample was introduced into a weighing bottle whose weight was known and the accurate weight thereof was determined by a chemical balance. The sample was then calcined in an electric furnace maintained at a temperature of 250°C for 2 hours, cooled down to room temperature over 30 minutes and the weight loss thereof on heating was determined. The amount of water of composition (WA.CO.) was then calculated according to the following relation:

$$WO.CO.(\%) = \{[(\text{Sample Wt.(g) Before Calcination}) - (\text{Sample Wt.(g) After Calcination})]/(\text{Sample Wt.(g) Before Calcination})\} \times 100$$

III. Determination of "Rate of Dry Out"

A sample was cut out from each gypsum board, which had a length, along the edge of the board, of 50 mm and a width, from the edge, of 40 mm. The sample was dried in a dryer maintained at 40°C over 24 hours till the weight thereof became constant. Then the sample was weighed and immersed in water for one hour. Thereafter, the sample was removed from water, excess water present on the surface thereof was thoroughly wiped with a dried cloth and the sample was again dried in a dryer maintained at 40°C over 24 hours till the weight thereof became constant. Then the weight of the sample was determined. The rate of dry out (D.O.R.) of each gypsum board was calculated on the basis of the following relation:

$$D.O.R.(\%) = \{[(\text{Sample Wt.(g) After Immersion in Water}) - (\text{Sample Wt.(g) Before Immersion in Water})]/(\text{Sample Wt.(g) After Immersion in Water})\} \times 100.$$

**Claims**

1. A method of producing a gypsum board comprising the steps of supplying a first slurry of calcined gypsum to the central area of a lower substratum for the gypsum board; supplying a second slurry of calcined gypsum supplemented with glycerin and/or at least one saccharide to both widthwise ends of said lower substratum; locating an upper substratum for the gypsum board on the lower substratum provided thereon with a layer of said first and second slurries; passing the resulting assembly through forming apparatus to provide a green gypsum board; setting the calcined gypsum in the green board; and subjecting the board to a drying process to remove excess moisture present therein through evaporation.

2. A method for producing a gypsum board comprising the steps of supplying a first slurry of calcined gypsum prepared in a main mixer to the widthwise central area of a lower substratum for gypsum board while simultaneously supplying a second slurry of calcined gypsum, which is identical to the first slurry, but is supplemented with glycerin and/or at least one saccharide and prepared in a sub-mixer, to both widthwise ends of the lower substratum for gypsum board, then putting an upper substratum for gypsum board on the lower substratum provided thereon with the layer of these first and second slurries, passing the resulting assembly through upper and lower forming machines to give a green gypsum board, setting the calcined gypsum in the green board, and subjecting the board to a drying process to remove excess moisture present therein through evaporation.

3. A method as claimed in claim 1 or 2, wherein the drying process is carried out at a temperature of not less than 160°C.

4. A method as claimed in any of claims 1 to 3, wherein the glycerin and/or at least one saccharide component are present in the second slurry in an amount ranging from 0.05 to 5% by weight on the basis of the total weight of the calcined gypsum used.

5. A method as claimed in claim 4, wherein the glycerin and/or at least one saccharide component are present in the second slurry in an amount ranging from 0.3 to 2% by weight on the basis of the total weight of the calcined gypsum used.

6. A method as claimed in any of claims 1 to 3, wherein glycerin and at least one saccharide component are present in the second slurry in an amount ranging from 0.05 to 5% by weight on the basis of the total weight of the calcined gypsum used.

7. A method as claimed in claim 6, wherein glycerin and at least one saccharide component are present in the second slurry in an amount ranging from 0.3 to 2% by weight on the basis of the total weight of the calcined gypsum used.

8. A method as claimed in any preceding claim, wherein the second slurry of calcined gypsum is separately prepared independently of the first slurry.

9. A method as claimed in any of claims 1 to 7, wherein the second slurry of calcined gypsum is prepared by withdrawing a part of the first slurry and mixing it together with the glycerin and/or at least one saccharide component.

10. The method of claim 9, wherein the amount of the first slurry for the preparation of the second slurry ranges from 5 to 30% by weight on the basis of the total amount of the first slurry.

11. A method as claimed in claim 10, wherein a solution of the saccharides is added to and mixed with the first slurry of calcined gypsum in an amount ranging from 0.05 to 5% by weight expressed in terms of the amount of the saccharide component on the basis of the weight of the calcined gypsum present in the first slurry.

12. A method as claimed in any preceding claim, wherein the first slurry also comprises glycerin and/or at least one saccharide component.

13. A method as claimed in any preceding claim, wherein the saccharide is at least one member selected from the group consisting of those represented by the following general formula: $C_n (H_2O)_n$, wherein n is an integer greater than 3.

14. A gypsum board comprising a first substratum, a second substratum, a layer of calcined gypsum between said first and second substrata, and peripheral edge portions of said layer containing glycerin and/or at least one saccharide.

# FIG. I

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US-A-3 832 250 (H. B. PEARSON)<br>* the whole document *<br>--- | 1-14 | B28B19/00<br>B28B13/02<br>C04B11/024<br>E04C2/04 |
| Y | US-A-4 279 673 (G. H. WHITE)<br>* the whole document *<br>--- | 1-14 | |
| Y,D | US-A-3 017 305 (M. C. DAILEY)<br>* the whole document *<br>--- | 1-14 | |
| Y | US-A-4 354 885 (G. H. WHITE)<br>* the whole document *<br>--- | 1-14 | |
| A | US-A-2 762 738 (R. R. TEALE)<br>* the whole document *<br>--- | | |
| A | US-A-2 985 219 (J. M. SUMMERFIELD)<br>* the whole document *<br>----- | | |

TECHNICAL FIELDS SEARCHED (Int.Cl.6)

B28B
E04C

The present search report has been drawn up for all claims

| Place of search | Date of completion of the search | Examiner |
|---|---|---|
| THE HAGUE | 13 April 1994 | Gourier, P |

EPO FORM 1503 03.82 (P04C01)